# EUROPÄISCHE PATENTSCHRIFT

(11) **EP 0 471 144 B1**
(45) Veröffentlichungstag und Bekanntmachung des Hinweises auf die Patenterteilung: **20.10.1993**
(21) Anmeldenummer: 91103541.8
(22) Anmeldetag: 08.03.1991
(51) Int. Cl.: F16H 1/28, C23C 14/50

(54) **Umlaufräder mit einem Rädersatz, insbesondere für Vorrichtungen zum Beschichten von Substraten**
Planetary transmission with a gear set, in particular for devices for coating substrates
Transmission planétaire avec un train d'engrenages, en particulier pour le revêtement de substrats

(30) Priorität: 14.08.1990 DE 4025659
(43) Veröffentlichungstag der Anmeldung: 19.02.1992
(73) Patentinhaber: LEYBOLD AKTIENGESELLSCHAFT, D-63450 Hanau (DE)
(72) Erfinder: Locher, Stefan, W-8755 Alzenau (DE); Wirth, Eckhard, W-6460 Gelnhausen 2 (DE)

(56) Entgegenhaltungen:
- GB-A- 907 455
- US-A- 3 858 547

## Beschreibung

Die Erfindung betrifft ein Umlaufrädergetriebe, insbesondere für Vorrichtungen zum Beschichten von Substraten in einer Hochvakuum-Beschichtungskammer, mit einem Rädersatz, der aus mindestens zwei Zahnrädern besteht, einem ersten Zanrad, dem sogenannten Antriebsritzel, welches mit einem, auf einer Getriebewelle angeordneten Sonnenrad im Wirkeingriff steht und einem zweiten Zahnrad, dem sogenannten Abtriebsritzel, welches mit einer schwenkbaren Welle, der Ausgangswelle verbindbar ist.

Es sind mehrere Vorrichtungen, vorzugsweise mit einem Umlaufrädergetriebe, bekannt, die zum Beschichten von Substraten in einer Hochvakuumkammer eingesetzt werden (DE-AS 1 521 250, DE-OS 24 48 023, US-PS 4,485,759). Diese Vorrichtungen sowie weitere bekannte Planetensysteme (Leybold-Prospekte 12-210.01 und 12-280.01) zeichnen sich dadurch aus, daß sie im wesentlichen aus einem scheiben- oder ringförmigen Tragrahmen bestehen, an dem die Substratträger planetengleich drehbar angeordnet sind.

Diese bekannten Vorrichtungen bzw. Planetensysteme haben den entscheidenden Nachteil, daß sie nur für eine definierte Anzahl von Planeten konstruiert und auch betreibbar sind. Abhängig von der jeweils für eine Beschichtungsanlage festgelegten Planetenanzahl, läßt sich der maximal verwendbare Planetendurchmesser ermitteln. Somit stehen Anzahl und Durchmesser der Planeten für eine Anlage fest und sind nur durch Austausch der Vorrichtung bzw. des Umlaufrädergetriebes gegen ein(e) andere(s) zu verändern.

Da die hier beschriebenen Vorrichtungen bzw. Getriebe als Substrathalter und Dreheinrichtungen für die Großserienbeschichtung von beispielsweise Kaltlichtspiegel oder auch für die Brillenoptik eingesetzt werden, sind eine maximale Beladung der Substratträger und kürzeste Rüstzeiten gefordert. Je nach Geometrie des zu beschichtenden Substrates ändern sich die Anforderungen an die dafür erforderlichen Vorrichtungen, was zunächst einen ständig wiederkehrenden zeitlichen und finanziellen Aufwand für Konstruktion und Fertigung der Vorrichtung bedingt und des weiteren einen Umbau oder Austausch der Vorrichtung in der Beschichtungsanlage erfordert.

Aufgabe der vorliegenden Erfindung ist es, nun eine Vorrichtung bzw. ein Umlaufrädergetriebe zu schaffen, das so universell ist, daß es für den Einsatz in unterschiedliche Typen von Beschichtungsanlagen sowie für die verschiedenartigsten Substrate einsetzbar ist; d.h., daß bei variablem Anstellwinkel der Planetenachse eine variable Anzahl von Planeten und ein maximaler Planetendurchmesser nutzbar sind.

Diese Aufgabe wird erfindungsgemäß dadurch gelöst, daß eine in einem ortsfesten Lager gehaltene und geführte Getriebeantriebswelle mit einer flanschförmigen, sich radial erstreckenden Planetenträgerplatte versehen ist, wobei die Hauptachse eines ortsfesten Sonnenrades mit der Rotationsachse der Getriebeantriebswelle zusammenfällt und das Sonnenrad mit einem Rädersatz im Eingriff steht, und der Lagerkäfig des Rädersatzes, bestehend aus einer oberen und einer unteren Platte, über eine sich parallel zur Rotationsachse erstreckende Achse in eine Öffnung eingreift, die im radial innenliegenden Bereich der Trägerplatte vorgesehen ist, und wobei die Abtriebswelle des Rädersatzes in einem Schlitz im radial äußeren Bereich in der Trägerplatte gehalten und geführt ist und für den Antrieb der Substrate parallel zur Rotationsachse aus der Trägerplatte herausgeführt ist.

Das hier beschriebene Umlaufrädergetriebe weist eine Zuordnung von sich auf der Planetenträgerplatte radial erstreckenden Schlitzen und einer konzentrischen Lochreihe auf, die in Kombination mit einem Rädersatz das Getriebe mit Vorteil so universell einstellbar machen, daß bei variablem Anstellwinkel der Planetenachse auch eine variable Anzahl von Planeten mit dem jeweils maximal möglichen Planetendurchmesser erreichbar sind. Durch diese Erfindung wird das Umlaufrädergetriebe einfach, leicht und schnell umrüstbar auf die verschiedenartigsten geometrischen Anforderungen der Substrate und/oder der Beschichtungsanlage selbst.

Weitere Ausführungsbeispiele und Merkmale sind in den Unteransprüchen näher beschrieben und gekennzeichnet.

Die Erfindung läßt die verschiedensten Ausführungsmöglichkeiten zu; das Prinzip ist in den anhängenden Zeichnungen näher dargestellt, und zwar zeigen:
- Fig. 1: die schematische Darstellung einer Vorrichtung zum Beschichten von Werkstücken in der Seitenansicht, bestehend im wesentlichen aus einer Beschichtungskammer mit einer Beschichtungsquelle, einem Umlaufrädergetriebe und einem Vakuumpumpstand,
- Fig. 2: einen Teil des Umlaufrädergetriebes im Schnitt, im wesentlichen bestehend aus einer Planetenträgerplatte, einem Rädersatz - nachfolgend auch Ausgleichsgetriebe genannt - und einem Schwenkgetriebe,
- Fig. 3: einen Planetenträger mit Anordnung eines Ausgleichsgetriebes für vier Planeten in der Draufsicht und in verkleinerter Darstellung,
- Fig. 4: einen Planetenträger mit Anordnung eines Ausgleichsgetriebes für zwölf Planeten in der Draufsicht und in verkleinerter Darstellung,
- Fig. 5: einen Teil des Planetenträgers mit Ausgleichsgetriebe gemäß Figur 2 im Schnitt,
- Fig. 6: einen Teil des Ausgleichsgetriebes gemäß Figur 5 in der Draufsicht,
- Fig. 7: ein Schwenkgetriebe im Schnitt,
- Fig. 8: ein Schwenkgetriebe gemäß Figur 7 in der Seitenansicht,
- Fig.: ein Systembild zur Erläuterung der Definitionen gemäß Figur 10 und
- Fig. 10: eine Graphik über die Variationsmöglichkeiten eines Umlaufrädergetriebes.

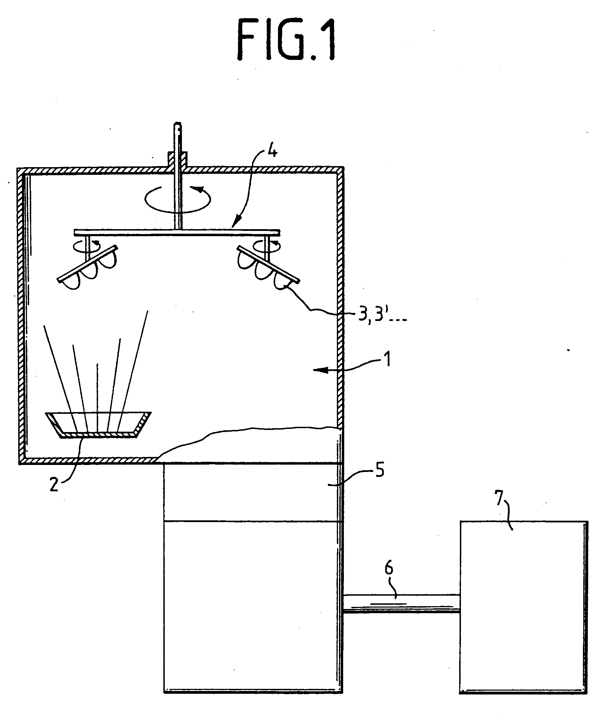

Wie Figur 1 zeigt, ist in einer Vakuumbeschichtungskammer 1 eine Beschichtungsquelle 2 so angeordnet, daß die zu beschichtenden Substrate 3, 3', ..., die an einem innerhalb der Kammer 1 drehbar angebrachten Umlaufrädergetriebe 4 befestigt sind, über die Beschichtungsquelle 2 hinweg bewegbar sind. Über ein Ventil 5 und eine Vakuumleitung 6 ist die Vakuumkammer 1 mit einem Vakuumpumpstand 7 verbunden.

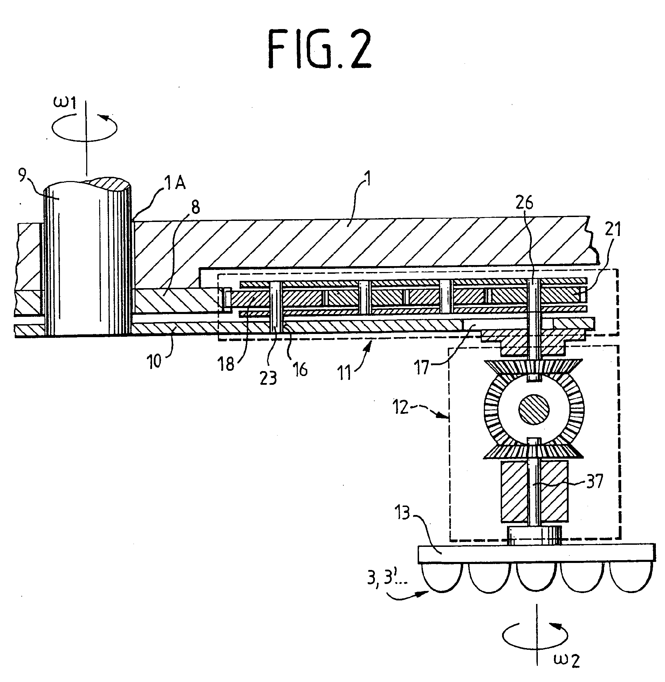

Das Umlaufrädergetriebe (Figur 2) besteht aus einem in der Beschichtungskammer 1 befestigten Sonnenrad 8, einer zentrisch durch das Sonnenrad 8 hindurchgeführten Getriebeantriebswelle 9 und einer scheibenförmigen, mit dieser fest verbundenen und rotierenden Planetenträgerplatte 10, an der wiederum das Ausgleichsgetriebe 11 sowie das Schwenkgetriebe 12 befestigt sind, die um das stehende Sonnenrad 8 umlaufen. An dem Schwenkgetriebe 12 ist nun der Substrathalter 13 - im folgenden auch Planet genannt - angebracht, der zur Aufnahme der zu beschichtenden Substrate 3, 3', ... dient.

Die Funktionsweise ist folgende:
Ein nicht näher bezeichneter Motor ist mit der Getriebeantriebswelle 9 verbunden und dreht diese mit der Winkelgeschwindigkeit ω₁. Der mit der Welle 9 fest verschraubte Planetenträger 10 rotiert zwangsläufig mit der selben Winkelgeschwindigkeit ω₁ wie die Welle 9. Der gemäß Figur 2 aus vier Zahnrädern bestehende Rädersatz 11 ist auf der Planetenträgerplatte 10 montiert und umläuft zwangsläufig das stehende Sonnenrad 8. Da die Zahnräder des Ausgleichsgetriebes 11 in permanentem Eingriff untereinander sind, stellt sich am äußeren Rad des Radsatzes 11 eine Winkelgeschwindigkeit ω₂ ein. Das mit dem Ausgleichsgetriebe 11 verbundene Schwenkgetriebe 12 führt somit eine Drehbewegung relativ zur Planetenträgerplatte 10 aus.

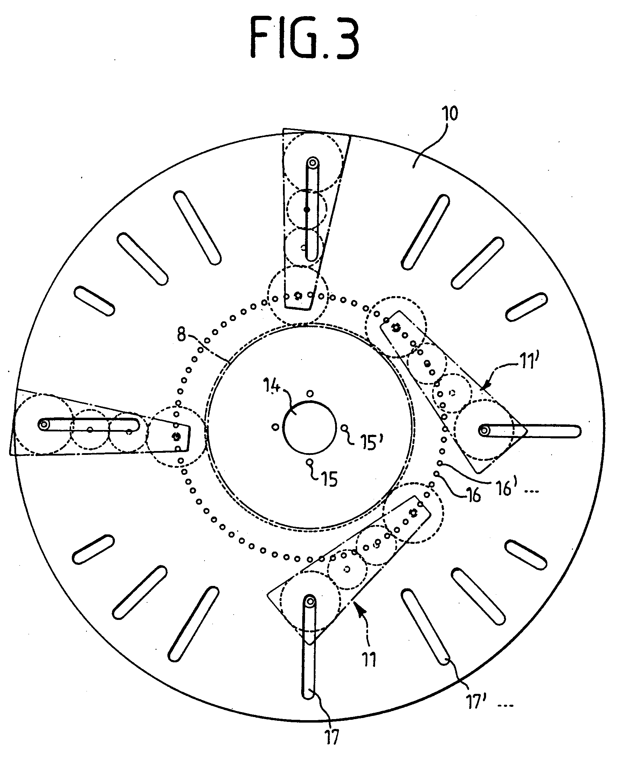

Die Planetenträgerplatte 10 (Figur 3) ist eine kreisförmige Scheibe mit einer zentralen Bohrung 14 zur Durchführung der Antriebswelle 9 und den zugehörigen Befestigungsbohrungen 15, 15', .... Eine konzentrische Lochreihe mit einer definierten Anzahl Bohrungen 16, 16', ... sowie radial eingebrachte Schlitze 17, 17', ... unterschiedlicher Länge dienen zur Aufnahme der Ausgleichsgetriebe 11, 11', ... auf der Planetenträgerplatte 10 und ermöglichen so den Einsatz einer variablen Anzahl von Planeten und eine variable Einstellung des Teilkreises, auf dem sich die Rotationsachse des jeweils äußeren Zahnrades 21 des Radsatzes 11, 11', ... befindet.

Die Lage und Länge der Schlitze 17, 17', ... ist abhängig von der maximalen Anzahl und der Geometrie der einzusetzenden Radsätze 11, 11', ....

Figur 3 zeigt ein Beispiel beim Einsatz von insgesamt vier Radsätzen 11, 11', ... mit maximalem Teilkreisdurchmesser auf der linken Hälfte der Darstellung und mit minimalem Teilkreisdurchmesser auf der rechten Hälfte der Figur.

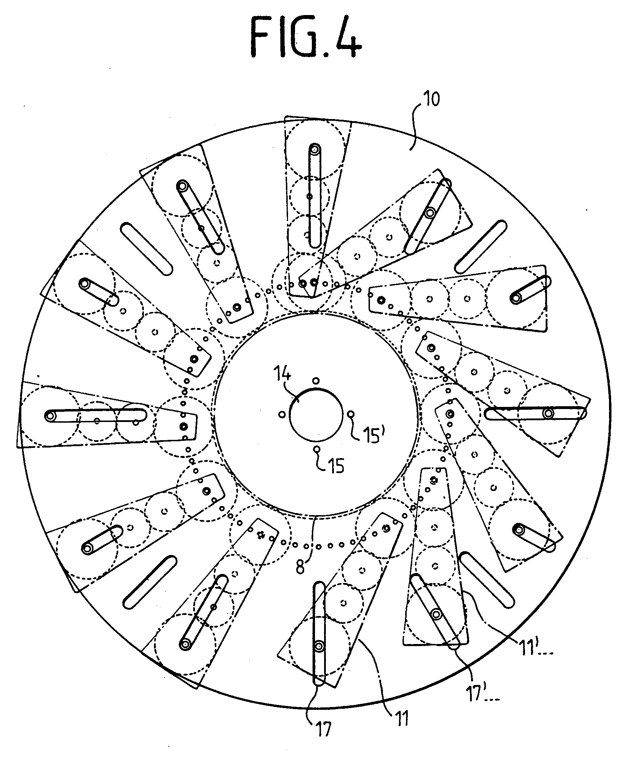

Figur 4 zeigt den maximalen Einsatz von zwölf Radsätzen 11, 11', ..., ebenso mit maximalem Teilkreisdurchmesser auf der linken und mit minimalem Teilkreisdurchmesser auf der rechten Hälfte der Darstellung.

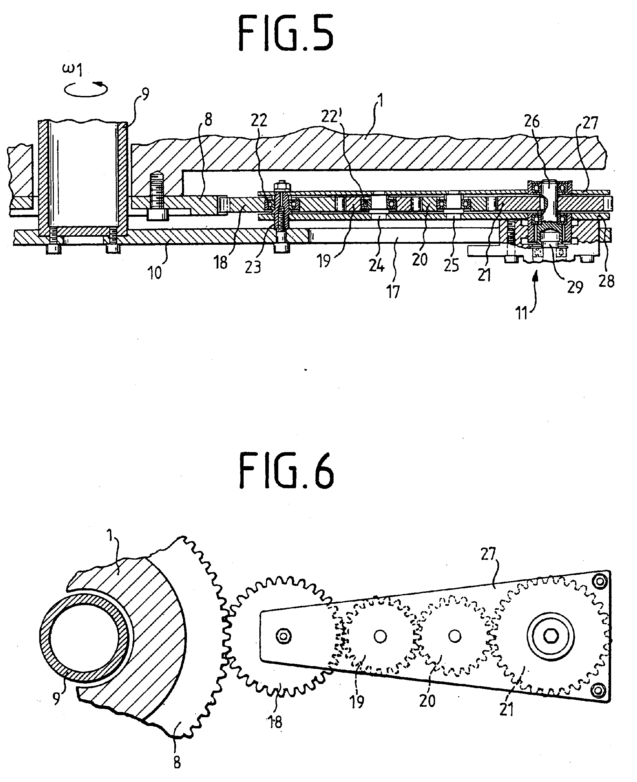

Die Zahnräder 18, 19, 20 und 21 des Radsatzes 11 (Figur 5) sind mit den Wälzlagern 22, 22', ... und Achsen 23, 24, 25 sowie der Welle 26 zwischen der oberen Platte 27 und der unteren Platte 28 montiert. Diese gesamte Einheit ist fest mit dem Planetenträger 10 verschraubt und wird durch die Antriebswelle 9 mit einer Winkelgeschwindigkeit ω₁ um das stehende Sonnenrad 8 gedreht.

Die Zahnräder 18 bis 21 des Ausgleichgetriebes 11 sind in permanentem Eingriff untereinander und mit dem Sonnenrad 8 (Figur 6).

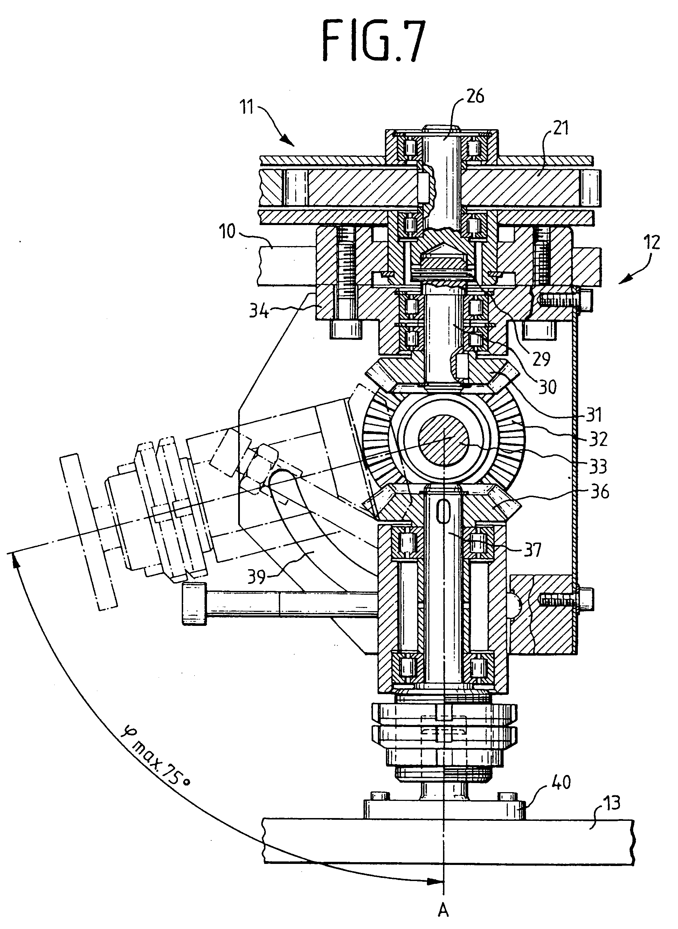

Das äußere, abtriebsseitige Zahnrad 21 des Radsatzes 11 ist auf einer Achse 26 montiert, die durch einen Spannstift 29 verdrehfest mit der Welle 30 des Schwenkgetriebes 12 verbindbar ist (Figur 7). Die Hauptachsrichtung der Ausgangswelle 37 und somit der Anstellwinkel des Planeten 13 ist variabel. Er ist stufenlos wählbar in jedem beliebigen Winkel φ zwischen der Hauptachse A der Welle 30 und bis maximal 75° von dieser Achse. Die strichlierte Darstellung in Figur 7 zeigt den maximalen Schwenkwinkel des Planeten.

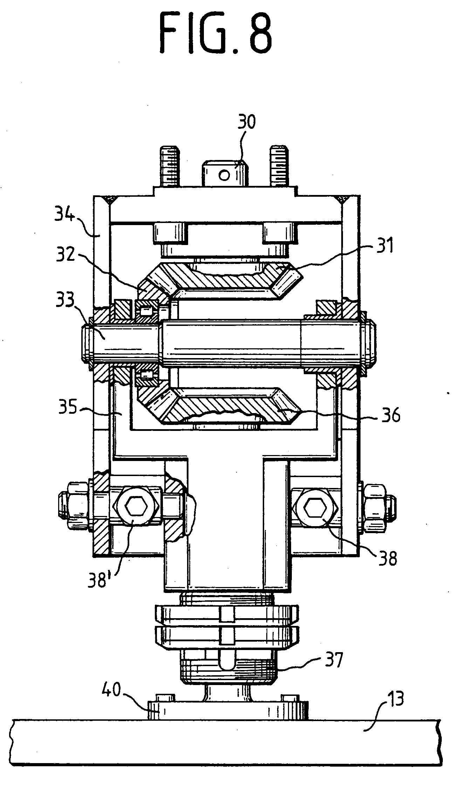

Auf der Eingangswelle 30 ist ein Kegelrad 31 montiert, das permanent im Eingriff ist mit einem korrespondierenden Kegelrad 32, welches auf einer Welle 33 montiert ist, deren Achse sich lotrecht zur Achse der Eingangswelle 30 erstreckt und dadurch gekennzeichnet ist, daß beide Wellen 30 und 33 in einem gemeinsamen, geschweißten Rahmen 34 montiert sind (Figur 8).

Zwischen den beiden Schenkeln des U-förmigen Rahmens 34 ist ein Y-förmiger Schwenkarm 35 so gelagert, daß er um die Welle 33 drehbar ist. In dem Schwenkarm 35 ist ein drittes Kegelrad 36 mit der Abtriebswelle 37 montiert, so daß dies ständig mit dem Kegelrad 32 kämmt. Der Schwenkarm 35 ist mittels Stellschrauben 38, 38' arretierbar, die in kreisbogenförmigen Schlitzen 39, 39' (Figur 7) im Rahmen 34 geführt werden.

An dem äußeren, freien Ende der Ausgangswelle 37 des Schwenkgetriebes 12 ist ein Flansch 40 befestigt, der wiederum zur Aufnahme des Substrathalters - des Planeten - 13 dient.

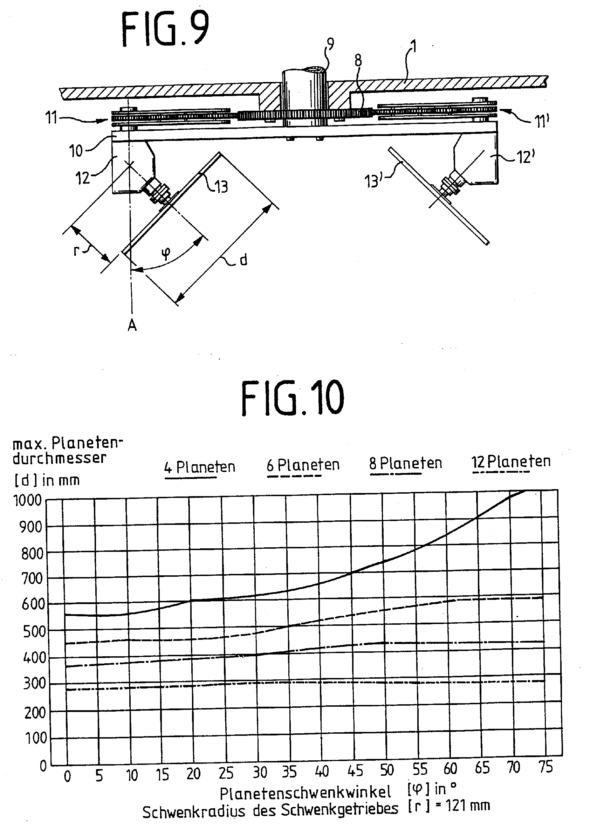

Die Geometrie und Lage der Planeten 13, 13', ... wird bestimmt durch die folgenden Längen- und Winkelmaße (Figur 9):
- r: ist der Schwenkradius des Schwenkgetriebes 12 in (mm),
- d: ist der Planetendurchmesser bzw. Durchmesser des Substrathalters 13 in (mm),
- φ: ist der Planetenschwenkwinkel bzw. Winkel zwischen der Hauptachse A der Eingangswelle des Schwenkgetriebes 12 und der der Ausgangswelle in Winkelgrad (°).

Figur 10 zeigt beispielhaft mehrere Variationsmöglichkeiten, die mit dem Umlaufrädergetriebe realisierbar sind und veranschaulicht die wesentlichen Vorteile eines variablen Systems gegenüber einem starren, das keine Verstellmöglichkeiten hat. Es wird zunächst unterschieden in der Anzahl der Planeten. Dargestellt sind vier Varianten mit 4, 6, 8 und 12 Planeten. Für jede einzelne Variante kann man nun, bei konstantem Schwenkradius des Schwenkgetriebes von r = 121 mm verschiedene Planetenschwenkwinkel φ einstellen.

Aufgezeigt ist der für dieses Beispiel nutzbare Bereich von 0 bis 75°. Als Funktion des eingestellten Winkels φ läßt sich nun anhand des Kurvenverlaufs in Figur 10 für jede einzelne Variante der Anzahl der Planeten, der maximal einsetzbare Durchmesser des Substratträgers - der Planetendurchmesser - ermitteln.

Die größten Variationsmöglichkeiten in bezug auf den Planetendurchmesser d erkennt man bei der obersten durchgezogenen Kurve - der Ausführung mit vier Planeten.

In dem hier ausgeführten Beispiel sind Planetendurchmesser d zwischen ca. 550 mm bei φ = 0° und max. 1000 mm bei φ = 75° einsetzbar.

Nur geringe Variationsmöglichkeiten zeigt die unterste strichpunktierte Kurve - die Ausführung mit zwölf Planeten. Hier liegen die möglichen max. Planetendurchmesser d in einem nur sehr schmalen Bereich zwischen ca. 260 bis 290 mm.

Die übrigen Varianten mit 6 und 8 Planeten verteilen sich auf den Bereich zwischen diesen beiden obengenannten Kurven.

### Auflistung der Einzelteile

- 1: Vakuum-Beschichtungskammer
- 1A: Lager
- 2: Beschichtungsquelle
- 3, 3', ...: Substrat
- 4: Umlaufrädergetriebe
- 5: Ventil
- 6: Vakuumleitung
- 7: Vakuumpumpstand
- 8: Sonnenrad
- 9: Getriebeantriebswelle
- 10: Planetenträgerplatte
- 11, 11', ...: Ausgleichsgetriebe, Rädersatz
- 12, 12', ...: Schwenkgetriebe
- 13, 13', ...: Substrathalter, Planet
- 14: Bohrung
- 15, 15', ...: Bohrung
- 16, 16', ...: Bohrung, Öffnung
- 17, 17', ...: Schlitz
- 18: Zahnrad, Antriebsritzel
- 19: Zahnrad
- 20: Zahnrad
- 21: Zahnrad, Abtriebsritzel
- 22, 22', ...: Wälzlager
- 23: Achse
- 24: Achse
- 25: Achse
- 26: Abtriebswelle
- 27: Platte oben
- 28: Platte unten
- 29: Spannstift
- 30: Eingangswelle
- 31: Kegelrad
- 32: Kegelrad
- 33: Welle
- 34: Rahmen
- 35: Schwenkarm
- 36: Kegelrad
- 37: Ausgangs-Welle
- 38, 38': Stellschraube
- 39, 39': Führungsschlitze
- 40: Flansch

### Definitionen

- ω₁: Winkelgeschwindigkeit der Getriebeantriebswelle
- ω₂: Winkelgeschwindigkeit der Abtriebswelle
- A: Hauptachse
- φ: Planetenschwenkwinkel
- r: Radius
- d: Planetendurchmesser

## Patentansprüche

1. Umlaufrädergetriebe, insbesondere für Vorrichtungen zum Beschichten von Substraten (3, 3', ...) in einer Hochvakuum-Beschichtungskammer (1), mit einem Rädersatz (11), der aus mindestens zwei Zahnrädern besteht, einem ersten Zahnrad, dem sogenannten Antriebsritzel (18), welches mit einem, auf einer Getriebeantriebswelle (9) zugeordneten Sonnenrad (8) im Wirkeingriff steht und einem zweiten Zahnrad, dem sogenannten Abtriebsritzel (21), welches mit einer schwenkbaren Welle, der Ausgangswelle (37) verbindbar ist, wobei die Getriebeantriebswelle (9) in einem ortsfesten Lager (1A) in der Kammer (1) gehalten und geführt wird und mit einer flanschförmigen, sich radial erstreckenden Planetenträgerplatte (10) versehen ist und die Hauptachse des ortsfesten Sonnenrades (8) mit der Rotationsachse der Gewindeantriebswelle (9) zusammenfällt und der Rädersatz (11) im wesentlichen durch einen Lagerkäfig gehalten wird, der aus einer oberen und einer unteren Platte (27, 28) besteht und daß der Rädersatz (11) über eine sich parallel zur Rotationsachse erstreckende Achse (23) in eine Öffnung (16) eingreift, die im radial innenliegenden Bereich der Trägerplatte (10) vorgesehen ist und die mit dem Abtriebsritzel (21) verbundene Abtriebswelle (26) des Rädersatzes (11) in einem Schlitz (17) im radial äußeren Bereich in der Trägerplatte (10) gehalten und geführt ist und für den Antrieb der Substrate (3, 3', ...) parallel zur Rotationsachse aus der Trägerplatte (10) herausgeführt ist.

2. Umlaufrädergetriebe nach Anspruch 1, ***dadurch gekennzeichnet,*** daß die Planetenträgerplatte (10) eine zur Bohrung (14) für die Antriebswelle (9) konzentrische Lochreihe, bestehend aus den Bohrungen (16, 16', ...) zur Aufnahme der Achse (23) des Rädersatzes (11), aufweist, wobei die Planetenträgerplatte (10) außerdem mit fächerförmig auf einem konzentrischen Strahlenbündel angeordneten Gruppe von Schlitzen (17, 17', ...) versehen ist, die der Führung der Abtriebswelle (26) des Rädersatzes (11) dienen, und daß die Planetenträgerplatte (10) aufgrund der Bohrungen (16, 16', ...) und der Gruppen von Schlitzen (17, 17', ...) mit mehreren Rädersätzen (11, 11', ...) bestückbar ist.

3. Umlaufrädergetriebe nach den Ansprüchen 1 und 2, ***dadurch gekennzeichnet***, daß der Rädersatz (11) in ständigem Eingriff mit dem Sonnenrad (8) ist.

4. Umlaufrädergetriebe nach Anspruch 3, ***dadurch gekennzeichnet,*** daß die Planetenträgerplatte (10) durch die Getriebeantriebswelle (9) antreibbar ist und daß das Antriebsritzel (18) des Rädersatzes (11) somit zwangsläufig um das stehende Sonnenrad (8) umläuft.

5. Umlaufrädergetriebe nach einem oder mehreren der obengenannten Ansprüche, ***dadurch gekennzeichnet,*** daß der jeweils maximal nutzbare Durchmesser des Substrathalters (Planeten) (13) abhängig ist von der Anzahl der eingesetzten Rädersätze (11) und dem Teilkreisdurchmesser, auf dem sich die Abtriebswelle (26) befindet.

6. Umlaufrädergetriebe nach einem oder mehreren der obengenannten Ansprüche, ***dadurch gekennzeichnet,*** daß mit der Abtriebswelle (26) des Rädersatzes (11) ein Schwenkgetriebe (12) in Wirkverbindung steht.

7. Umlaufrädergetriebe nach Anspruch 6, ***dadurch gekennzeichnet,*** daß die Ausgangswelle (37) des Schwenkgetriebes (12) so gelagert ist, daß ihre Rotationsachse zur Rotationsachse (A) der Eingangswelle (30) schwenkbar ist.

8. Umlaufrädergetriebe nach Anspruch 7, ***dadurch gekennzeichnet,*** daß an die schwenkbare Ausgangswelle (37) der Substrathalter (13) ankoppelbar ist und mit dieser umläuft.

9. Umlaufrädergetriebe nach einem oder mehreren der obengenannten Ansprüche, ***dadurch gekennzeichnet,*** daß die Werkstoffpaarung der Zahnräder vorzugsweise jeweils in Edelstahl/Bronze ausgeführt ist.

## Claims

1. Planetary transmission, in particular for devices for coating substrates (3, 3', ...) in a high-vacuum coating chamber (1), having a gear train (11) consisting of at least two gearwheels, also having a first gearwheel, the so-called drive pinion (18), which is operationally engaged with a sun gear (8) associated on a transmission drive shaft (9), and a second gearwheel, the so-called power take-off pinion (21), which is connectable to a pivotable shaft, the output shaft (37), wherein the transmission drive shaft (9) is held and guided in a fixed bearing (1A) in the chamber (1) and is provided with a flange-like, radially extending planet carrier plate (10), and the principle axis of the fixed sun gear (8) coincides with the axis of rotation of the threaded drive shaft (9), and the gear train (11) is held essentially by a bearing cage consisting of an upper and a lower plate (27, 28), and in that the gear train (11) engages via a shaft (23) extending parallel to the axis of rotation in an aperture (16) provided in the radially inner region of the carrier plate (10), and the power take-off shaft (26) of the gear train (11) associated with the power take-off pinion (21) is held and guided in a slot (17) in the radially outer region of the carrier plate (10) and passes out of the carrier plate parallel to the axis of rotation in order to drive the substrates (3, 3', ...).

2. Planetary transmission according to claim 1,
characterised in that the planet carrier plate (10) has a row of holes, concentric to the bore (14) for the drive shaft (9), consisting of the bores (16, 16', ...) for receiving the shaft (23) of the gear train (11), and the planet carrier plate (10) is further provided with groups of slots (17, 17',...) arranged like a fan on a concentric beam and serving to guide the power take-off shaft (26) of the gear train (11), and in that, by virtue of the bores (16, 16', ...) and groups of slots (17, 17',...), the planet carrier plate (10) can be equipped with a plurality of gear trains (11, 11', ...).

3. Planetary transmission according to claims 1 and 2,
characterised in that the gear train (11) is in constant engagement with the sun gear (8).

4. Planetary transmission according to claim 3,
characterised in that the planet carrier plate (10) is drivable by the transmission drive shaft (9), and in that the drive pinion (18) of the gear train (11) is thus compelled to revolve around the fixed sun gear (8).

5. Planetary transmission according to one or more of the above-mentioned claims, characterised in that the maximum usable diameter for each substrate holder (planet) (13) is dependent on the number of gear trains (11) used and on the reference diameter on which the power take-off shaft (26) is located.

6. Planetary transmission according to one or more of the above-mentioned claims, characterised in that a pivot gear (12) is operationally connected to the power take-off shaft (26) of the gear train (11).

7. Planetary transmission according to claim 6,
characterised in that the output shaft (37) of the pivot gear (12) is so mounted that its axis of rotation is pivotable relative to the axis of rotation (A) of the input shaft (30).

8. Planetary transmission according to claim 7,
characterised in that the substrate holder (13) can be coupled to the pivotable output shaft (37) and revolves therewith.

9. Planetary transmission according to one or more of the above-mentioned claims, characterised in that the material pairing of the gearwheels is preferably executed in high-quality steel/bronze in each case.

## Revendications

1. Mécanisme à roues épicycloïdales, notamment pour dispositifs destinés à revêtir des substrats (3, 3', ...) dans une chambre de revêtement sous vide poussé (1), comprenant un train de roues (11) composé d'au moins deux roues dentées, une première roue dentée appelée le pignon moteur (18), qui est en prise avec une roue planétaire (8) agencée sur un arbre moteur (9) du mécanisme et d'une deuxième roue dentée, appelée le pignon récepteur (21), qui peut être reliée à un arbre inclinable, l'arbre de sortie (37), dans lequel l'arbre moteur (9) du mécanisme, est tenu et guidé dans la chambre (1) dans un palier fixe (1A) et est muni d'une plaque porte-satellites (10) en forme de collerette, qui s'étend radialement, et l'axe principal de la roue planétaire fixe (8) coïncide avec l'axe de rotation de l'arbre moteur (9) du mécanisme et le train de roues (11) est sensiblement tenu par une cage de paliers, qui est composée d'une plaque supérieure et d'une plaque inférieure (27, 28), et le train de roues (11) est engagé par un axe (23) qui s'étend parallèlement à l'axe de rotation, dans une ouverture (16) qui est prévue dans la région de la plaque porteuse (10) qui se trouve radialement à l'intérieur, et l'arbre récepteur (26) du train de roues (11) qui est relié au pignon récepteur (21), est tenu et guidé dans une fente (17) de la région radialement extérieure de la plaque porteuse (10) et émerge de la plaque porteuse (10) parallèlement à l'axe de rotation pour l'entraînement des substrats (3, 3', ...).

2. Mécanisme à roues épicycloïdales selon la revendication 1, caractérisé en ce que la plaque porte-satellites (10) présente une série de trous concentrique au perçage (14) de passage de l'arbre moteur (9), composée des perçages (16, 16', ...) destinés à recevoir l'axe (23) du train de roues (11), la plaque porte-satellites (10) étant par ailleurs munie d'un groupe de fentes (17, 17', ...) disposée en éventail sur un faisceau de rayons concentriques, qui servent à guider l'arbre récepteur (26) du train de roues (11), et en ce que la plaque porte-satellites (10) peut être garnie de plusieurs trains de roues (11, 11', ...) grâce à la présence des perçages (16, 16', ...) et du groupe de fentes (17, 17', ...).

3. Mécanisme à roues épicycloïdales selon les revendications 1 ou 2, caractérisé en ce que le train de roues (11) est en prise constante avec la roue planétaire (8).

4. Mécanisme à roues épicycloïdales selon la revendication 3, caractérisé en ce que la plaque porte-satellites (10) peut être entraînée par l'arbre moteur (9) du mécanisme, et en ce que le pignon moteur (18) du train de roues (11) tourne ainsi nécessairement autour de la roue planétaire fixe (8).

5. Mécanisme à roues épicycloïdales selon une ou plusieurs des revendications précitées, caractérisé en ce que le diamètre maximum utilisable du porte-substrats (satellite) est fonction du nombre des trains de roues (11) utilisés et du diamètre du cercle de référence sur lequel se trouve l'arbre récepteur (26).

6. Mécanisme à roues épicycloïdales selon une ou plusieurs des revendications précitées, caractérisé en ce qu'un mécanisme inclinable (12) est en liaison avec l'arbre récepteur (26) du train de roues (11).

7. Mécanisme à roues épicycloïdales selon la revendication 6, caractérisé en ce que l'arbre de sortie (37) du mécanisme inclinable (12) est monté de manière que son axe de rotation puisse s'incliner par rapport à l'axe de rotation (A) de l'arbre d'entrée (30).

8. Mécanisme à roues épicycloïdales selon la revendication 7, caractérisé en ce que le porte-substrats (13) peut être accouplé à l'arbre de sortie inclinable (37) et tourne avec ce dernier.

9. Mécanisme à roues épicycloïdales selon une ou plusieurs des revendications précitées, caractérisé en ce que la combinaison de matériaux des roues dentées est de préférence la combinaison acier inoxydable/bronze.
